# EUROPEAN PATENT SPECIFICATION

(11) **EP 1 718 576 B1**
(45) Date of publication and mention of the grant of the patent: **04.01.2017**
(21) Application number: 05713605.3
(22) Date of filing: 10.02.2005
(51) Int. Cl.: C04B 2/10, B01F 15/00, B01J 6/00, F27B 15/14, F27B 15/09

(54) **HIGH EFFICIENCY REFRACTORYLESS KETTLE FOR CALCINING GYPSUM AND METHOD THEREFOR**
HOCHLEISTUNGSKESSEL OHNE FEUERFESTE STRUKTUR ZUM KALZINIEREN VON GIPS UND VERFAHREN DAFÜR
CHAUDRON SANS REFRACTAIRE A GRANDE EFFICACITE POUR LA CALCINATION DU GYPSE ET PROCÉDÉ ASSOCIÉ

(30) Priority: 27.02.2004 US 788871; 27.02.2004 US 788864
(43) Date of publication of application: 08.11.2006
(73) Proprietor: UNITED STATES GYPSUM COMPANY, Chicago, IL 60606 (US)
(72) Inventor: BOLIND, Michael, L., Ingleside, IL 60041 (US); PORTER, Michael, J., Hanover Park, IL 60103 (US); DUNDAS, Warner, J., Des Plaines, IL 60016 (US); NELSON, Christopher, R., Grayslake, IL 60030 (US); DEODHAR, Subhash, Vernon Hills, IL 60061 (US)
(74) Representative: BSB Intellectual Property Law
(86) International application number: PCT/US2005/004797
(87) International publication number: WO 2005/091819

(56) References cited:
- US-A- 4 161 390
- US-A- 4 626 199
- US-A- 5 333 597

## Description

The present invention relates to a high efficiency method and apparatus for calcining gypsum and/or drying gypsum.

### BACKGROUND OF THE INVENTION

Calcining of gypsum comprises converting calcium sulfate dihydrate by heating itinto calcium sulfate hemihydrate, better known as stucco. Prior calcining apparatus and methods have taken various forms. Traditionally, the calcining of gypsum has occurred in a large kettle, having a thickened dome-shaped bottom, against which a gas-fired flame is directed, with the kettle and burner flame being enclosed in a suitable refractory structure. There is usually an associated hot pit into which the calcined material is fed. The kettle must withstand temperatures in the 1093.3° - 1315.6° (2000F° - 2400F°) range, hence requiring expensive fire box steel plate on its domed bottom, which was typically 4.45 cm (1 3/4 inches) thick. U.S. Pat. No. 3,236,509 typifies this type construction. This approach had numerous disadvantages, such as the extreme waste of hot burner gases, and the associated refractory brick enclosure which, when repairs or kettle shut-down were needed, first required a lengthy cool-down period.

Other calcining kettles, of the general type described above, have included supplemental submerged combustion designs where exhaust gases from the gas-fired burners were discharged directly into the kettle contents. Here, the gas flame directly impinged against the material being calcined, and there was an increased possibility of creating so-called "dead burn" material, i.e., insoluble anhydrite. U.S. Pat. Nos. 4,176,157 and 4,238,238 typify that type approach. Additionally, other prior art calcining kettles, of the general type described above, included a series of cross burner tubes which passed generally horizontally completely through the kettle, allowing the hot gases within the refractory structure and surrounding the kettle to be supplementally directed through the tubes, and thus, through the kettle contents to further heat the same. U.S. Pat. Nos. 3,307,915 and 4,163,390 typify this type kettle construction. There have also been horizontally-aligned, rotary calcining structures; U.S. Pat. No. 3,871,829 typifies this type approach.
Besides the above kettle constructions which normally require expensive refractory structure, there have also been refractoryless kettles using the submerged combustion principle, including those having auxiliary draft tube structure encompassing the main burner tube, so as to reduce formation of deadburned insoluble anhydrite. U.S. Pat. No. 4,626,199 typifies this type construction. Additionally, there are so-called refractoryless conical kettles with various types of submerged combustion heating systems, again with the attendant risk of creating non-uniform stucco and dead burn material. U.S. Pat. Nos. 4,629,419 and 4,744,961 typify such conical kettle constructions. More recent calcining kettle modifications have included so-called "boost" burner constructions, including electrical boost calrods, see U.S. Pat. No. 4,744,963, and gas-fired boost burner designs, both added as supplemental heaters to traditional refractory-type kettle constructions.

U.S. Patent Nos. 5,743,954 and 5,927,968 disclose a method and apparatus for the continuous calcining of gypsum material in a refractoryless kettle preferably heated by a multiple series of separate immersion tube coils, each coil operating within a specific calcining zone inside the kettle.

### SUMMARY OF THE INVENTION

The present invention provides for an apparatus for calcining gypsum having a housing with a bottom wall, an open top, and a plurality of side walls extending between the bottom wall and the open top. A fixture is attached to the housing for receiving raw gypsum from a source and transferring the gypsum into the housing. The apparatus further includes at least one burner connected to the housing and operable for combusting an air-fuel mixture to heat the gypsum. At least one serpentine burner conduit extends from the burner through the housing and terminates through an upper surface of a support floor operable for holding the gypsum in the housing. The gypsum is first heated through conduction heat transfer from the burner conduit and is further heated by the exhaust gas that reenters the gypsum from the bottom of the apparatus. The exhaust gas fluidizes the gypsum as part of the calcining process.

The apparatus may include an agitation mechanism operable for ensuring good fluidization of the powdered gypsum. The apparatus is operable for preventing channeling of exhaust gas through the gypsum, preventing dead zones in the gypsum, and for preventing the gypsum from collecting along the surface of the gypsum support floor. The agitation mechanism includes an agitator frame and a plurality of agitation members connected thereto. The agitation mechanism is operable for agitating the gypsum adjacent the support floor when the agitator frame is reciprocally moved from a first position to a second position. The agitator frame has at least one pivotal support arm that is pivotally attached to the calcining apparatus on one end and to the frame at the other end such that the frame will swing about a pivot axis when the motion is imparted to the frame. An actuator arm extends through the side of the housing to provide a mechanical connection between an actuator and the agitator frame. A method for calcining gypsum includes providing gypsum to a calcining apparatus. The gypsum is first heated via conduction with a serpentine burner conduit extending from an external burner through the gypsum and terminating through a surface of the gypsum support floor. The exhaust gas is directed through a fluidization pad to fluidize and further heat the gypsum via convection as the exhaust gas flows through the gypsum and out the top of the apparatus.

Other applications of the present invention will become apparent to those skilled in the art when the following description of the best mode contemplated for practicing the invention is read in conjunction with the accompanying drawings.

### BRIEF DESCRIPTION OF THE DRAWINGS

Fig. 1 is a perspective view of a high-efficiency calcining apparatus;
Fig. 2 is an enlarged perspective view of a fluidization bed partially cut-away to show the layers of a fluidization pad;
Fig. 3 is a perspective view of an agitation mechanism;
Fig. 4 is the apparatus of Fig. 1 with the burner conduit in an uninstalled position;
Fig. 5 is the apparatus of Fig. 1 showing a plurality of access panels attached thereto;
Fig. 6 is a perspective view of the calcining apparatus of Fig. 1 showing the exhaust flow path with arrows.

### DETAILED DESCRIPTION OF THE INVENTION

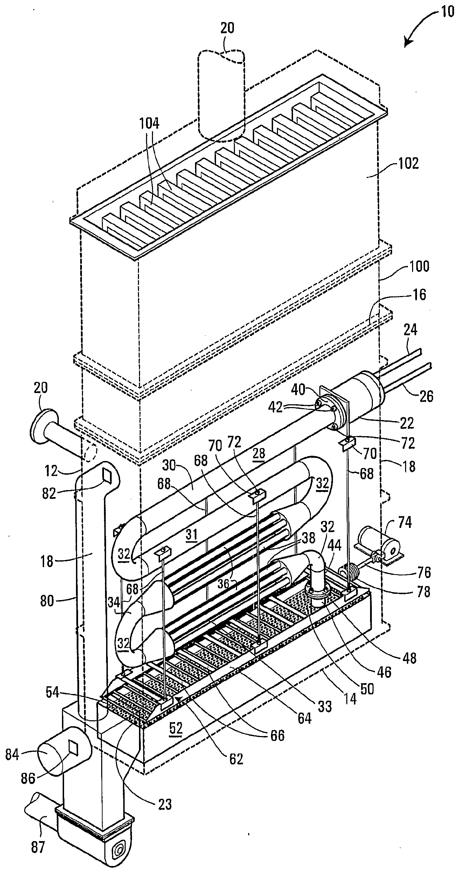

Referring to Fig. 1, an apparatus 10 for calcining gypsum is shown therein. A housing 12 includes a bottom wall 14, an open top 16, and a plurality of side walls 18 extending between the bottom wall 14 and the open top 16. An inlet fixture 20 is located on the housing 12 for receiving crushed or synthetic raw gypsum from a source (not shown) and for transferring the gypsum into the housing 12. At least one burner 22 is connected to the housing 12. The burner 22 is operable for combusting an air-fuel mixture supplied by a forced air conduit 24 and a fuel conduit 26. The burner 22 can be any type known to those skilled in the art, but will typically burn a hydrocarbon based fuel. The heated exhaust from the burner 22 will flow through at least one serpentine shaped burner conduit 28 that extends through a gypsum support floor 23 adjacent the bottom wall 14 of the housing 12. The hot exhaust flow from the burner 22 is utilized to heat the gypsum material to approximately 300°F. In known manner, the heating process converts the gypsum into calcium sulfate hemihydrate, or stucco. Alternatively, the heating process can simply heat wet synthetic gypsum to a desired temperature, typically below 300°F in order to dry excess moisture from the wet synthetic gypsum for subsequent calcination in a separate process. Alternatively, the heating process can perform the drying and calcination processes in the same vessel.

The burner conduit 28 advantageously includes an elongate linear portion 30 extending away from the burner 22. The linear portion increases the life span of the burner conduit 28. That is, if the flames from the burner 22 were to directly impinge the burner conduit 28 along a curved or angled portion, the flames would overheat the side wall of the conduit causing high stress which shortens the life of the conduit 28. However, due to the presence of the initial elongated linear burner section 30 (which can extend some fifteen to twenty feet in a commercial installation), the burner flames do not directly impinge on the burner conduit, and this is because the flames have converted, along the length of section 30, to hot exhaust gases. Importantly, the burner conduit 28 includes a plurality of curved sections 32 to connect the linear portions 30, 31, and 33, provide the serpentine shape. The burner conduit 28 may include at least one reduced diameter section 34 to provide increased exhaust flow velocity to thereby enhance the heat transfer effectiveness of the conduit 28. The temperature of the exhaust cools proportionally to the distance it moves away from the burner 22, therefore the velocity may be increased to maintain a suitable heat transfer rate. The burner conduit 28 can also include a multi-conduit portion 36 wherein a plurality of relatively smaller diameter conduits 38 are formed to be in fluid communication with relatively larger single conduit portions 32. The smaller diameter conduits 38 provide more surface area for a given effective flow area and thus increase the heat transfer relative to the larger conduit 32. The multi-conduit portions 36 can be connected to the single conduit portions 32 through various means known to those skilled in the art such as welding, brazing, and press fit, mechanical fasteners, etc. The burner conduit 28 can be attached to the burner 22 via a flange 40 with a plurality of threaded fasteners 42. The burner conduit 28 likewise can be attached at the discharge end 44 to an outlet conduit 46 that extends through the support floor 23. The burner conduit 28 can be attached to the outlet conduit 46 via a flange 48 with a plurality of threaded fasteners 50.

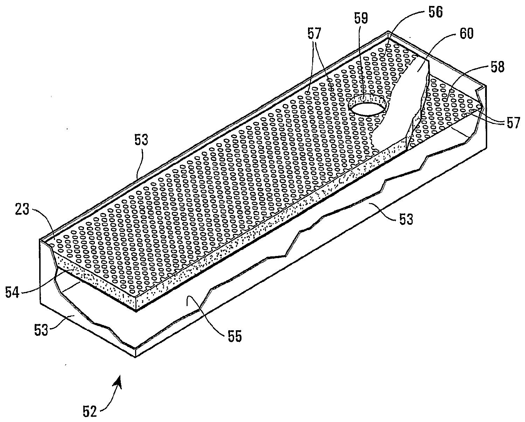

A fluidization base 52, shown in Figs. 1, 2, 4, and 6 (best seen in Fig. 2) can be positioned in a lower portion of the housing 12 to receive exhaust flow from the burner conduit 28. The fluidization base 52 has a plurality of sidewalls 53 extending upwardly from a bottom 55. The fluidization base 52 can have a fluidization pad 54 positioned above the bottom 55 of the fluidization base 52. The fluidization pad 54 forms at least a portion of the support floor 23 of the housing 12. The fluidization pad 54 is operable for containing the gypsum product along the lower portions of housing 12, and for evenly distributing the exhaust flow as it passes from the fluidization base 52 directly into the gypsum. The fluidization base 52 delivers the aeration, the agitation ensures good fluidization especially of cohesive powders that will not otherwise fluidize. The fluidization pad 54 includes first and second outer perforated plates 56, 58. The plates 56, 58 include a plurality of through apertures 57 that permit the exhaust flow to pass therethrough. A bore hole 59 is formed in the fluidization pad 54 to provide access for the conduit 46 (see Fig. 1) to pass through and deliver the exhaust flow to the fluidization base 52. At least one intermediate porous layer 60, formed of a porous fiber mat or woven stainless steelmedia, is positioned between the outer plates 56, 58. The intermediate layer 60 of media can be made from compressed silica fiber, woven stainless steel meshor similar materials suitable for fluidization as known to those skilled in the art to withstand high exhaust gas temperatures. The perforated plates 56, 58 are most preferably made from a metal such as stainless steel or the like. The fluidization pad 54 operates by allowing diffused exhaust gas to bubble out through the generally evenly spaced apertures 57 of perforated plate 56. One advantage to using woven stainless steel media 60 is that the perforated plates 56, 58 are not required except to provide support and protection for the media from punctures.

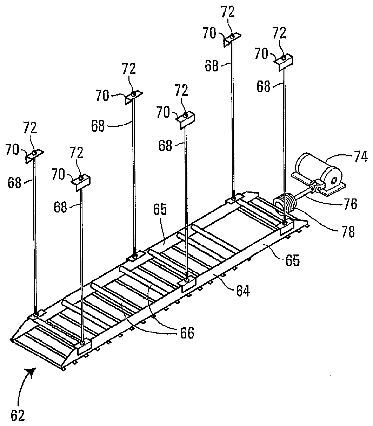

An agitation mechanism 62, shown in Figs. 1, 3, 4, and 6 (best seen in Fig. 3), can be positioned just above the fluidization pad 54. The agitation mechanism 62 includes an agitator frame 64 having a pair of side beams 65. The agitator frame 64 has a plurality of agitation members 66 connected to the agitator frame 64 for agitating the gypsum product adjacent the fluidization pad 54 along the support floor 23. In one embodiment, the agitation members 66 can take the form of a cross bar pattern. The agitation mechanism 62 locally chums the heated gypsum product when the agitator frame 64 is set into motion. At least one pivotal support arm 68 pivotally connects the agitation frame 64 to the housing 12 (shown in Fig. 1). The connection to the housing 12 can be formed with an angle plate 70 affixed to the housing 12 in a suitable manner such as by welding or mechanically fastening, etc. The support arm 68 can be secured to the angle plate 70 via a threaded fastener 72 or the like. The pivotal support arm 68 is most preferably a cable or similar structure to more easily facilitate a swinging motion by the agitator frame 64 about a common pivot axis when motion is imparted to the agitator frame 64. Alternate moving patterns by the agitator frame 64 are contemplated by the present invention. For example, one skilled in the art would readily understand how to impart motion to the agitator frame 64 in a vertical, horizontal, or arcute pattern, or any combination thereof.

An actuation power source, such as an electric motor or pneumatic air cylinder 74, can be connected to the agitator frame 64 through an actuator arm 76. An expandable seal 78 is engaged with the actuator arm 76 and the housing 12 (not shown in Fig. 2) to prevent gypsum product from leaking out of the housing 12 about the actuator arm. The seal 78 expands and contracts as the actuator arm 76 moves between first and second positions as the agitator frame 64 swings. Alternatively, the actuator arm 76 can be connected to mechanically leveraged linkages (not shown) that can extend from an actuation power source (not shown) positioned at the top of the housing 12 down to the agitator frame 64 as is known to those skilled in the art. The seal 78 can be made from any suitable material that can withstand temperatures greater than 300 degrees Fahrenheit and pressures up to 10 psig (pounds per square inch gage).

Referring again to Fig. 1, an overflow tube 80 is fluidically connected to the housing 12 to allow processed gypsum to egress from the housing 12 into the overflow tube 80. An overflow valve 82 is associated with the overflow tube 80 to prevent gypsum from egressing from the housing 12 prior to being heated to a predetermined condition. A dump port 84 includes a dump valve 86 that permits the selective draining of the contents in the housing 12. The valves 82, 86 can be of any type known to those skilled in the art, but are most preferably electrically or pneumaticallyactuated.

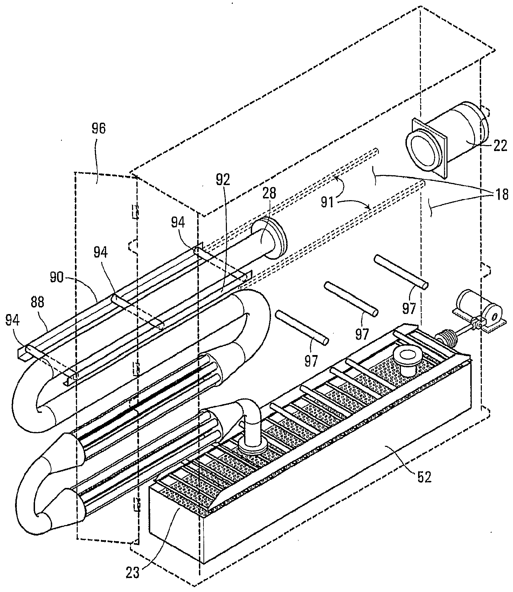

Referring now to Fig. 4, a conduit support 88 is slidingly connected to the housing 12 for supporting the burner conduit 28 during installation. The support 88 is operable for sliding between an outer position at least partially external to the housing 12 (shown in Fig. 4) and the installed position inside the housing 12. The conduit support 88 holds the conduit during installation and removal from the housing 12. The support 88 includes a pair of side rails 90, 92 slidingly connected to slide elements 91 formed on parallel walls 18 of the housing 12. A plurality of cross-bars 94 extend between the side rails 90, 92 to provide support surfaces for the burner conduit 28 to rest thereon. The housing 12 includes a side panel 96 operable to open when installing the burner conduit 28. A plurality of ties 97 structurally connects the side walls 18 of the housing 12 to one another to prevent outward bowing of the walls 18 when the housing 12 is filled with gypsum. The ties 97 can be welded or otherwise affixed by any means that is conventional.

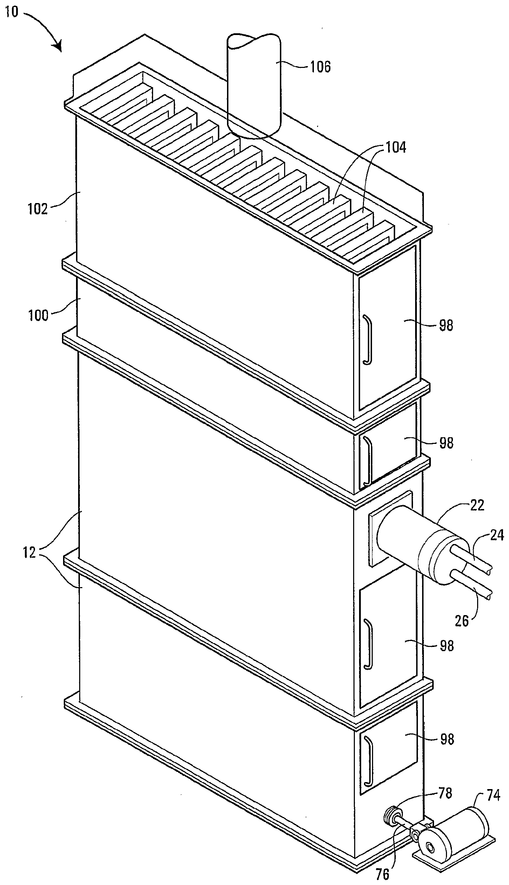

Referring now to Fig. 5, the apparatus 10 includes access panels 98 located on the side of the housing 12 for permitting servicing of the internal components, such as the burner 22 and the conduit 28, etc. A disengagement chamber 100 is positioned above the open top 16 of the housing 12 and is constructed to permit access thereto for servicing internal components of the housing 12. A dust collector 102 can be positioned above the disengagement chamber 100 to collect gypsum dust particles and recycle the particles back into the housing 12 for calcining. The dust collector 102 can include a plurality of replaceable filters 104. The filters 104 can be of any desired type such as round cartridge filters, bag filters, or the like. The filters 104 can be periodically cleaned by intermittently injecting air through an opposite side of where the dust is collected or by shaking as is known to those skilled in the art.An exhaust stack 106 permits the exhaust to be removed from the apparatus 10 after the gypsum dust particles have been removed by the filters 104.

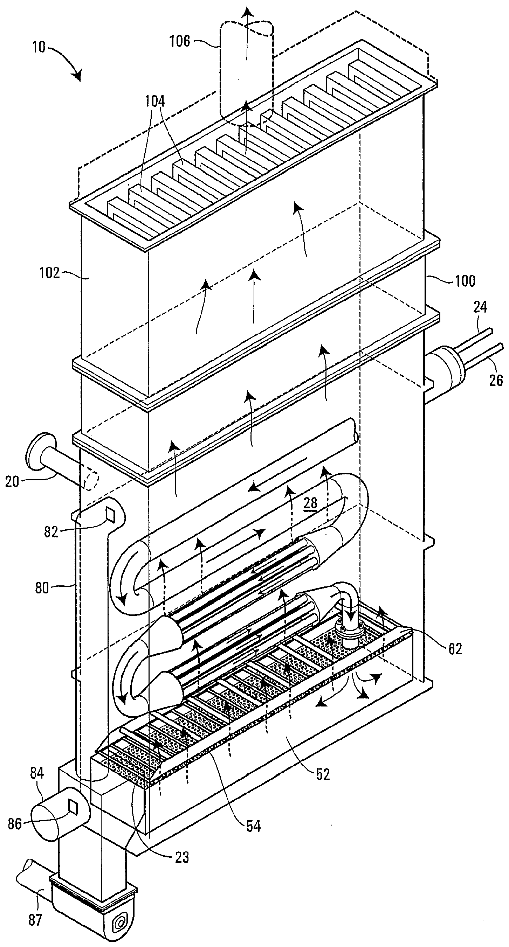

In operation, gypsum powder is fed into an inlet fixture 20 to fill the housing 12. Air and fuel are supplied by the conduits 24,26 respectively, to the burner 22. The burner 22 combusts the air-fuel mixture and provides hot exhaust gases which flow in the direction of the arrows shown in Fig. 6. The exhaust flows through the serpentine burner conduit 28 into the fluidization base 52. From the fluidization base 52, the exhaust flows horizontally and then upwardly through the fluidization pad 54 positioned above the base 52. The fluidization pad 54 distributes the exhaust gases through the gypsum product so that the heated exhaust gases are evenly distributed therethrough. The outer surface of the burner conduit 28 provides heat to the gypsum through conduction heat transfer. Thus, the gypsum product is heated both when the exhaust gas flows through the burner conduit 28 and through the gypsum after traveling through the fluidization pad 54. The present invention provides for increased fuel efficiency over the prior art because the dual heating method removes the maximum amount of heat from the exhaust and transfers it into the gypsum. Exhaust gas continues to flow upwardly through the disengagement chamber 100 permitting some of the gypsum particles to separate from the exhaust flow and fall back into the housing 12. The dust collector 102 cleans the airborne gypsum particles from the exhaust gas before exhaust gas egresses through the exhaust stack 106. The gypsum particles can periodically be knocked from the collector filter cartridges (or bags) back into the bed of gypsum.

Advantageously, an agitation mechanism 62 is provided to ensure good fluidization by preventing exhaust from channeling directly through gypsum powder. Natural gypsum typically includes a fine powder that may be too cohesive to achieve good fluidization without agitation. The agitation mechanism 62 is operated by swinging between first and second positions to locally mix the gypsum and scrape it away from the fluidized pad 54. The calcining apparatus 10 has a high efficiency because substantially all of the heat produced by the burner 22 is utilized in heating the gypsum and is not lost through the exhaust process. The temperature of the exhaust gas leaving the gypsum product is approximately 300°F, which is the approximate temperature required for the gypsum to be processed into stucco. Synthetic gypsum that is manufactured with a standard particle size may not require agitation to ensure good fluidization.

While the preceding text sets forth a detailed description of numerous different embodiments of the invention, it should be understood that the legal scope of the invention is defined by the words of the claims set forth at the end of this patent. The detailed description is to be construed as exemplary only and does not describe every possible embodiment of the invention since describing every possible embodiment would be impractical, if not impossible. Numerous alternative embodiments could be implemented, using either current technology or technology developed after the filing date of this patent, which would still fall within the scope of the claims defining the invention.

## Claims

1. An apparatus (10) for calcining gypsum comprising:
a housing (12) having an open top (16), a bottom wall (14), and a plurality of side walls (18) extending therebetween;
a fixture (20) located on the housing (12) for receiving raw gypsum from a source and transferring the gypsum into the housing (12);
a support floor (23) positioned proximate the bottom wall (14) for holding the gypsum in the housing (12);
at least one burner (22) connected to the housing (12) and operable for combusting an air/fuel mixture to heat the gypsum; and
at least one serpentine burner conduit (28) extending through the housing (12) from the at least one burner (22) and terminating through the support floor (23).

2. The apparatus (10) of claim 1, wherein the burner conduit (28) includes an initial linear section (30) extending from the burner (22).

3. The apparatus (10) of claim 1, wherein the burner conduit (28) includes at least one reduced diameter section (34) to provide increased flow velocity and enhanced heat transfer effectiveness.

4. The apparatus (10) of claim 1, wherein the burner conduit (28) further comprises:
a plurality of relatively smaller diameter conduits (38) forming at least one multi conduit portion (36) of the burner conduit (28), the at least one multi conduit portion (36) constructed to be in fluid communication with the relatively larger diameter conduit (32).

5. The apparatus (10) of claim 1, wherein the support floor (23) comprises:
a fluidization base (52) for receiving the exhaust flow from the burner conduit (28).

6. The apparatus (10) of claim 5, further comprising:
a fluidization pad (54) positioned above the fluidization base (52), the fluidization pad (54) at least partially forming the support floor (23).

7. The apparatus (10) of claim 6, wherein the fluidization pad (54) comprises:
first and second outer perforated plates (56, 58); and
at least one intermediate layer (60) of material positioned between the outer plates (56, 58).

8. The apparatus (10) of claim 7, wherein the intermediate layer (60) of material is a porous media made from one of a compressed silica fiber and a woven stainless steel mesh.

9. The apparatus (10) of claim 7, wherein the perforated plates (56, 58) are made from metal.

10. The apparatus (10) of claim 6, wherein the fluidization pad (54) comprises: a porous media material.

11. The apparatus (10) of claim 10, wherein the porous media is made from one of a compressed silica fiber and a woven stainless steel mesh.

12. The apparatus (10) of claim 1, further comprising:
an agitation mechanism (62) operable for preventing fluid channeling and preventing dead pockets of gypsum from forming adjacent the support floor (23).

13. The apparatus (10) of claim 12, wherein the agitation mechanism (62) includes an agitator frame (64).

14. The apparatus (10) of claim 13, wherein the agitation mechanism (62) includes a plurality of agitation members (66) connected to the agitator frame (64) for agitating the gypsum adjacent the support floor (23) when the agitator frame (64) moves.

15. The apparatus (10) of claim 13, wherein the agitation mechanism (62) includes at least one pivotable support arm (68) for pivotally connecting the agitator frame (64) to the apparatus (10).

16. The apparatus (10) of claim 15, wherein the at least one pivotable support arm (68) is a cable pivotally attached to the calcining apparatus (10) at one end and to the agitator frame (64) at the other end, wherein the agitator frame (64) will swing about a pivot axis when motion is imparted thereto.

17. The apparatus (10) of claim 13, wherein the agitation mechanism (62) includes a power source (74) to move the agitator frame (64).

18. The apparatus (10) of claim 17, wherein the power source (74) includes one of an electric motor (74) and a pneumatic actuator.

19. The apparatus (10) of claim 18, further comprising:
an actuator arm (76) extending through the housing (12) to provide a connection between the motor (74) and the agitator frame (64).

20. The apparatus (10) of claim 19, wherein the agitation mechanism (62) further comprises:
an expandable seal (78) engaged with the actuator arm (76) and the housing to prevent gypsum from leaking from the housing (12).

21. The apparatus (10) of claim 20, wherein the seal (78) is configured to expand and contract as the actuator arm (76) moves between first and second positions.

22. The apparatus (10) of claim 13, wherein the agitator frame (64) is configured to move in one of: a horizontal, a vertical, and an arcuate pattern.

23. The apparatus (10) of claim 1, further comprising:
an overflow tube (80) in fluid communication with the apparatus (10) to allow processed gypsum to egress out of the apparatus (10).

24. The apparatus (10) of claim 23, further comprising:
an overflow valve (82) associated with overflow tube (80) to prevent gypsum from egressing from the apparatus (10) before being heated to a predetermined condition.

25. The apparatus (10) of claim 1, further comprising: a dump port (84) having a dump valve (86) for permitting selective draining of the housing (10).

26. The apparatus (10) of claim 1, further comprising:
an exhaust stack connected to the apparatus for exhausting combustion gas from the apparatus.

27. The apparatus (10) of claim 1, further comprising:
a conduit support (88) slideably connected to the apparatus (10) for supporting the burner conduit (28) during installed and uninstalled positions, the conduit support (88) movable between a first position internal to the housing (12) and a second position at least partially external to the housing (12) for supporting the conduit (28) during installation and removal from the housing (12).

28. The apparatus (10) of claim 27, wherein the conduit support (88) comprises:
a pair of beams (90, 92) slideably connected to parallel walls (18) of the apparatus (10); and a plurality of cross bars (94) extending between the beams (90, 92) being engageable with the burner conduit (28).

29. The apparatus (10) of claim 1, further comprising: at least one access panel (98) located on the housing (12) for servicing internal components thereof.

30. The apparatus (100 of claim 1, further comprising: a disengagement chamber (100) positioned adjacent the open top (16) of the housing (12), the disengagement chamber (100) having at least one door to permit access therein.

31. The apparatus (10) of claim 1, further comprising:
a dust collector (102) for collecting gypsum dust particles and recycling the particles back to the housing (12).

32. The apparatus (10) of claim 31, wherein the dust collector (102) includes a plurality of filters (104).

33. The apparatus (10) of claim 1, wherein the burner conduit (28) includes a section having at least one through aperture to permit exhaust flow to exit therefrom directly into the gypsum.

34. A method for calcining gypsum comprising the steps of:
providing gypsum to a calcining apparatus (10);
heating the gypsum with a serpentine burner (22) via conduction heat transfer with a conduit (28) extending from an external burner (22) though the gypsum and terminating at a bottom wall (14) of the apparatus (10);
flowing the exhaust gas through a fluidization pad (54); and
fluidizing and further heating the gypsum via convection heat transfer by flowing substantially all of the exhaust gas through the gypsum.

35. The method of 34, further comprising: opening an overflow valve (82) to permit the fluidized gypsum to egress therethrough when the gypsum reaches approximately 150 degrees Centigrade (300 degrees Fahrenheit).

36. The method of 34, further comprising: removing and churning stagnant portions of gypsum adjacent the bottom wall with an agitation mechanism (62).

## Patentansprüche

1. Vorrichtung (10) zum Kalzinieren von Gips, die Folgendes umfasst:
ein Gehäuse (12), das einen offenen Oberteil (16), eine Bodenwand (14) und mehrere Seitenwände (18), die sich zwischen denselben erstrecken, hat,
eine Einrichtung (20), die an dem Gehäuse (12) angeordnet ist, um Rohgips von einer Quelle aufzunehmen und den Gips in das Gehäuse (12) weiterzuleiten,
einen Tragboden (23), der nahe der Bodenwand (14) angeordnet ist, um den Gips in dem Gehäuse (12) zu halten,
mindestens einen Brenner (22), der mit dem Gehäuse (12) verbunden und funktionsfähig ist, um ein Luft-Brennstoff-Gemisch zu verbrennen, um den Gips zu erhitzen, und
mindestens eine Schlangenbrennerleitung (28), die sich von dem mindestens einen Brenner (22) durch das Gehäuse (12) erstreckt und durch den Tragboden (23) endet.

2. Vorrichtung (10) nach Anspruch 1, wobei die Brennerleitung (28) eine anfängliche lineare Sektion (30) einschließt, die sich von dem Brenner (22) erstreckt.

3. Vorrichtung (10) nach Anspruch 1, wobei die Brennerleitung (28) mindestens eine Sektion (34) mit verringertem Durchmesser einschließt, um eine gesteigerte Strömungsgeschwindigkeit und einen verbesserten Wärmeübertragungswirkungsgrad zu gewährleisten.

4. Vorrichtung (10) nach Anspruch 1, wobei die Brennerleitung (28) ferner Folgendes umfasst:
mehrere Leitungen (38) mit verhältnismäßig kleinerem Durchmesser, die mindestens einen Mehrleitungsabschnitt (36) der Brennerleitung (28) bilden, wobei der mindestens eine Mehrleitungsabschnitt (36) so aufgebaut ist, dass er in Fluidverbindung mit der Leitung (32) mit verhältnismäßig größerem Durchmesser steht.

5. Vorrichtung (10) nach Anspruch 1, wobei der Tragboden (23) Folgendes umfasst:
eine Fluidisierungsbasis (52) zum Aufnehmen des Abgasstroms von der Brennerleitung (28).

6. Vorrichtung (10) nach Anspruch 5, die ferner Folgendes umfasst:
eine Fluidisierungsbahn (54), die oberhalb der Fluidisierungsbasis (52) angeordnet ist, wobei die Fluidisierungsbahn (54) mindestens teilweise den Tragboden (23) bildet.

7. Vorrichtung (10) nach Anspruch 6, wobei die Fluidisierungsbahn (54) Folgendes umfasst:
eine erste und eine zweite äußere perforierte Platte (56, 58) und
mindestens eine Zwischenlage (60) aus Material, die zwischen den äußeren Platten (56, 58) angeordnet ist.

8. Vorrichtung (10) nach Anspruch 7, wobei die Zwischenlage (60) aus Material ein poröses Medium ist, das aus einem von einer komprimierten Silikafaser und einem gewebten rostfreien Stahlnetz hergestellt ist.

9. Vorrichtung (10) nach Anspruch 7, wobei die perforierten Platten (56, 58) aus Metall hergestellt sind.

10. Vorrichtung (10) nach Anspruch 6, wobei die Fluidisierungsbahn (54) Folgendes umfasst: ein poröses Medienmaterial.

11. Vorrichtung (10) nach Anspruch 10, wobei das poröse Medium aus einem von einer komprimierten Silikafaser und einem gewebten rostfreien Stahlnetz hergestellt ist.

12. Vorrichtung (10) nach Anspruch 1, die ferner Folgendes umfasst:
einen Rührmechanismus (62), der funktionsfähig ist, um ein Fluidkanalisieren zu verhindern und die Bildung von toten Taschen von Gips angrenzend an den Tragboden (23) zu verhindern.

13. Vorrichtung (10) nach Anspruch 12, wobei der Rührmechanismus (62) einen Rührerrahmen (64) einschließt.

14. Vorrichtung (10) nach Anspruch 13, wobei der Rührmechanismus (62) mehrere Rührelemente (66), die mit dem Rührerrahmen (64) verbunden sind, einschließt, um den Gips angrenzend an den Tragboden (23) zu rühren, wenn sich der Rührerrahmen (64) bewegt.

15. Vorrichtung (10) nach Anspruch 13, wobei der Rührmechanismus (62) mindestens einen schwenkbaren Tragarm (68) zum schwenkbaren Verbinden des Rührerrahmens (64) mit der Vorrichtung (10) einschließt.

16. Vorrichtung (10) nach Anspruch 15, wobei der mindestens eine schwenkbare Tragarm (68) ein Kabel ist, das schwenkbar an dem einen Ende an der Kalzinierungsvorrichtung (10) und an dem anderen Ende an dem Rührerrahmen (64) befestigt ist, wobei der Rührerrahmen (64) um eine Schwenkachse schwingen wird, wenn ihm eine Bewegung mitgeteilt wird.

17. Vorrichtung (10) nach Anspruch 13, wobei der Rührmechanismus (62) eine Antriebsquelle (74) einschließt, um den Rührerrahmen (64) zu bewegen.

18. Vorrichtung (10) nach Anspruch 17, wobei die Antriebsquelle (74) entweder einen Elektromotor (74) oder einen pneumatischen Stellantrieb einschließt.

19. Vorrichtung (10) nach Anspruch 18, die ferner Folgendes umfasst:
einen Antriebsarm (76), der sich durch das Gehäuse (12) erstreckt, um eine Verbindung zwischen dem Motor (74) und dem Rührerrahmen (64) bereitzustellen.

20. Vorrichtung (10) nach Anspruch 19, wobei der Rührmechanismus (62) ferner Folgendes umfasst:
eine ausdehnbare Dichtung (78), die mit dem Antriebsarm (76) und dem Gehäuse in Eingriff gebracht ist, um zu verhindern, dass Gips aus dem Gehäuse (12) austritt.

21. Vorrichtung (10) nach Anspruch 20, wobei die Dichtung (78) dafür konfiguriert ist, sich auszudehnen und zusammenzuziehen, wenn sich der Antriebsarm (76) zwischen einer ersten und einer zweiten Stellung bewegt.

22. Vorrichtung (10) nach Anspruch 13, wobei der Rührerrahmen (64) dafür konfiguriert ist, sich in einem von einem horizontalen, einem vertikalen und einem bogenförmigen Muster zu bewegen.

23. Vorrichtung (10) nach Anspruch 1, die ferner Folgendes umfasst:
eine Überlaufröhre (80) in Fluidverbindung mit der Vorrichtung (10), um zu ermöglichen, dass verarbeiteter Gips aus der Vorrichtung (10) austritt.

24. Vorrichtung (10) nach Anspruch 23, die ferner Folgendes umfasst:
einen Überlaufschieber (82), der mit der Überlaufröhre (80) verknüpft ist, um zu verhindern, dass Gips aus der Vorrichtung (10) austritt, bevor er zu einem vorbestimmten Zustand erhitzt ist.

25. Vorrichtung (10) nach Anspruch 1, die ferner Folgendes umfasst: eine Entleerungsöffnung (84), die einen Entleerungsschieber (86) hat, zum Ermöglichen eines selektiven Ablassens des Gehäuses (12).

26. Vorrichtung (10) nach Anspruch 1, die ferner Folgendes umfasst:
einen Abgasschacht, der mit der Vorrichtung verbunden ist, um Verbrennungsgas aus der Vorrichtung abzuführen.

27. Vorrichtung (10) nach Anspruch 1, die ferner Folgendes umfasst:
eine Leitungsstütze (88), die verschiebbar mit der Vorrichtung (10) verbunden ist, um die Brennerleitung (28) während eingebauter und nicht eingebauter Stellungen zu tragen, wobei die Leitungsstütze (88) beweglich ist zwischen einer ersten Stellung, innerhalb des Gehäuses (12), und einer zweiten Stellung, mindestens teilweise außerhalb des Gehäuses (12), um die Leitung (28) während des Einbauens und des Entfernens aus dem Gehäuse (12) zu tragen.

28. Vorrichtung (10) nach Anspruch 27, wobei die Leitungsstütze (88) Folgendes umfasst:
ein Paar von Trägern (90, 92), die verschiebbar mit parallelen Wänden (18) der Vorrichtung (10) verbunden sind, und mehrere Querriegel (94), die sich zwischen den Trägern (90, 92) erstrecken, die mit der Brennerleitung (28) in Eingriff gebracht werden können.

29. Vorrichtung (10) nach Anspruch 1, die ferner Folgendes umfasst: mindestens eine Zugangsplatte (98), die an dem Gehäuse (12) zum Warten innerer Bestandteile derselben angeordnet ist.

30. Vorrichtung (10) nach Anspruch 1, die ferner Folgendes umfasst: eine Ausrückkammer (100), die angrenzend an den offenen Oberteil (16) des Gehäuses (12) angeordnet ist, wobei die Ausrückkammer (100) mindestens eine Tür hat, um einen Zugang in dieselbe zu ermöglichen.

31. Vorrichtung (10) nach Anspruch 1, die ferner Folgendes umfasst:
einen Staubsammler (102) zum Sammeln von Gipsstaubteilchen und Zurückführen der Teilchen zu dem Gehäuse (12).

32. Vorrichtung (10) nach Anspruch 31, wobei der Staubsammler (102) mehrere Filter (104) einschließt.

33. Vorrichtung (10) nach Anspruch 1, wobei die Brennerleitung (28) eine Sektion einschließt, die mindestens eine Durchgangsöffnung hat, um zu ermöglichen, dass ein Abgasstrom aus derselben unmittelbar in den Gips austritt.

34. Verfahren zum Kalzinieren von Gips, das die folgenden Schritte umfasst:
das Bereitstellen von Gips an eine Kalzinierungsvorrichtung (10),
das Erhitzen des Gipses mit einem Schlangenbrenner (22) über Leitungswärmeübertragung mit einer Leitung (28), die sich von einem externen Brenner (22) durch den Gips erstreckt und an einer Bodenwand (14) der Vorrichtung (10) endet, das Strömenlassen des Abgases durch eine Fluidisierungsbahn (54) und
das Fluidisieren und weitere Erhitzen des Gipses über Konvektionswärmeübertragung durch das Strömenlassen im Wesentlichen des gesamten Abgases durch den Gips.

35. Verfahren nach Anspruch 34, das ferner Folgendes umfasst: das Öffnen eines Überlaufschiebers (82), um zu ermöglichen, dass der fluidisierte Gips durch denselben austritt, wenn der Gips annähernd 150 Grad Celsius (300 Grad Fahrenheit) erreicht.

36. Verfahren nach Anspruch 34, das ferner Folgendes umfasst: das Entfernen und Durchrühren stagnierender Teile von Gips angrenzend an die Bodenwand mit einem Rührmechanismus (62).

## Revendications

1. Appareil (10) pour la calcination de gypse, comprenant :
un boîtier (12) comportant une partie supérieure ouverte (16), une paroi inférieure (14) et plusieurs parois latérales (18) s'étendant entre elles ;
un cadre (20) agencé sur le boîtier (12) pour recevoir le gypse brut à partir d'une source et pour transférer le gypse dans le boitier (12) ;
un fond de support (23) positionné près de la paroi inférieure (14) pour retenir le gypse dans le boîtier (12) ;
au moins un brûleur (22) connecté au boîtier (12) et opérationnel pour brûler un mélange d'air/carburant afin de chauffer le gypse ; et
au moins un conduit de brûleur en serpentin (28) s'étendant à travers le boîtier (12) à partir du au moins un brûleur (22) et se terminant à travers le fond de support (23).

2. Appareil (10) selon la revendication 1, dans lequel le conduit du brûleur (28) englobe une section initiale linéaire (30) s'étendant à partir du brûleur (22).

3. Appareil (10) selon la revendication 1, dans lequel le conduit du brûleur (28) englobe au moins une section à diamètre réduit (34) pour établir une vitesse d'écoulement accrue et une efficacité améliorée du transfert de chaleur.

4. Appareil (10) selon la revendication 1, dans lequel le conduit du brûleur (28) comprend en outre :
plusieurs conduits à diamètre relativement réduit (38) formant au moins une partie a conduits multiples (36) du conduit du brûleur (28), la au moins une partie à conduits multiples (36) étant construite de sorte à être en communication de fluide avec le conduit à diamètre relativement accru (32).

5. Appareil (10) selon la revendication 1, dans lequel le fond de support (23) comprend :
une base de fluidisation (52) pour recevoir le flux d'échappement du conduit du brûleur (28).

6. Appareil (10) selon la revendication 5, comprenant en outre :
un tampon de fluidisation (54) positionné au-dessus de la base de fluidisation (52), le tampon de fluidisation (54) formant au moins en partie le fond de support (23).

7. Appareil (10) selon la revendication 6, dans lequel le tampon de fluidisation (54) comprend :
des première et deuxième plaques perforées externes (56, 58) ; et
au moins une couche intermédiaire (60) de matériau positionnée entre les plaques externes (56, 58).

8. Appareil (10) selon la revendication 7, dans lequel la couche intermédiaire (60) de matériau est un matériau de support poreux composé d'une fibre de silice comprimée ou un treillis d'acier inoxydable tissé.

9. Appareil (10) selon la revendication 7, dans lequel les plaques perforées (56, 58) sont composées de métal.

10. Appareil (10) selon la revendication 6, dans lequel le tampon de fluidisation (54) comprend un matériau de support poreux.

11. Appareil (10) selon la revendication 10, dans lequel le support poreux est composé d'une fibre de silice comprimée ou d'un treillis d'acier inoxydable tissé ;

12. Appareil (10) selon la revendication 1, comprenant en outre :
un mécanisme d'agitation (62) qui est opérationnel pour empêcher une canalisation du fluide et pour empêcher la formation de poches mortes de gypse près du fond de support (23).

13. Appareil (10) selon la revendication 12, dans lequel le mécanisme d'agitation (62) englobe un cadre de l'agitateur (64).

14. Appareil (10) selon la revendication 13, dans lequel le mécanisme d'agitation (62) englobe plusieurs éléments d'agitation (66) connectés au cadre de l'agitateur (64) pour agiter le gypse près du fond de support (23) lors du déplacement du cadre de l'agitateur (64).

15. Appareil (10) selon la revendication 13, dans lequel le mécanisme d'agitation (62) englobe au moins un bras de support à pivotement (68) pour connecter de manière pivotante le cadre de l'agitateur (64) à l'appareil (10).

16. Appareil (10) selon la revendication 15, dans lequel le au moins un bras de support à pivotement (68) est un câble fixé de manière pivotante sur l'appareil de calcination (10) au niveau d'une extrémité et au cadre de l'agitateur (64) au niveau de l'autre extrémité, le cadre de l'agitateur (64) pivotant autour d'un axe de pivotement lorsqu'un mouvement y est appliqué.

17. Appareil (10) selon la revendication 13, dans lequel le mécanisme d'agitation (62) englobe une source d'énergie (74) pour déplacer le cadre de l'agitateur (64).

18. Appareil (10) selon la revendication 17, dans lequel la source d'énergie (74) englobe un moteur électrique (74) ou un actionneur pneumatique.

19. Appareil (10) selon la revendication 18, comprenant en outre :
un bras de l'actionneur (76) s'étendant à travers le boîtier (12) pour établir une connexion entre le moteur (74) et le cadre de l'agitateur (64).

20. Appareil (10) selon la revendication 19, dans lequel le mécanisme d'agitation (62) comprend en outre :
un joint à dilatation (78) engagé dans le bras de l'actionneur (76) et le boîtier pour empêcher une fuite du gypse du boîtier (12).

21. Appareil (10) selon la revendication 20, dans lequel le joint (78) est configuré de sorte à se dilater et à se contracter lors du déplacement du bras de l'actionneur (76) entre des première et deuxième positions.

22. Appareil (10) selon la revendication 13, dans lequel le cadre de l'agitateur (64) est configuré de sorte à se déplacer selon un motif horizontal, vertical ou arqué.

23. Appareil (10) selon la revendication 1, comprenant en outre :
un tube de trop-plein (80) en communication de fluide avec l'appareil (10) pour permettre la sortie du gypse traité de l'appareil (10).

24. Appareil (10) selon la revendication 23, comprenant en outre :
une soupape de trop-plein (82) associée au tube de trop-plein (80) pour empêcher la sortie du gypse de l'appareil (10) avant sont chauffage à une température prédéterminée.

25. Appareil (10) selon la revendication 1, comprenant en outre : un orifice de décharge (84) comportant une soupape de décharge (86) pour permettre une évacuation sélective du boîtier (12).

26. Appareil (10) selon la revendication 1, comprenant en outre :
une cheminée d'échappement connectée à l'appareil pour évacuer les gaz de combustion de l'appareil.

27. Appareil (10) selon la revendication 1, comprenant en outre :
un support du conduit (88) connecté de manière coulissante à l'appareil (10) pour supporter le conduit du brûleur (28) dans des positions installée et non installée, le support du conduit (88) pouvant se déplacer entre une première position située à l'intérieur du boîtier (12) et une deuxième position située au moins en partie à l'extérieur du boîtier (12), pour supporter le conduit (28) au cours de son installation dans le boitier (12) et de son retrait de celui-ci.

28. Appareil (10) selon la revendication 27, dans lequel le support du conduit (88) comprend :
une paire de barres (90, 92) connectée de manière coulissante à des parois parallèles (18) de l'appareil (10), et plusieurs traverses (94) s'étendant entre les barres (90, 92) pouvant s'engager dans le conduit du brûleur (28).

29. Appareil (10) selon la revendication 1, comprenant en outre au moins un panneau d'accès (98) agencé dans le boîtier (12) en vue de l'entretien des composants internes de celui-ci.

30. Appareil (10) selon la revendication 1, comprenant en outre une chambre de dégagement (100) positionnée près de la partie supérieure ouverte (16) du boîtier (12), la chambre de dégagement (100) comportant au moins une porte pour permettre l'accès à celle-ci.

31. Appareil (10) selon la revendication 1, comprenant en outre :
un collecteur de poussières (102) pour collecter les particules de poussière du gypse et recycler les particules vers le boîtier (12).

32. Appareil (10) selon la revendication 31, dans lequel le collecteur de poussières (102) englobe plusieurs filtres (104).

33. Appareil (10) selon la revendication 1, dans lequel le conduit du brûleur (28) englobe une section comportant au moins une ouverture de passage pour permettre la sortie du flux d'échappement directement dans le gypse.

34. Procédé de calcination de gypse, comprenant les étapes ci-dessous :
fourniture de gypse à un appareil de calcination (10) ;
chauffage du gypse par un brûleur en serpentin (22) par transfert de chaleur par conduction, comportant un conduit (28) s'étendant à partir d'un brûleur externe (22) à travers le gypse et se terminant au niveau d'une paroi inférieure (14) de l'appareil (10) ;
écoulement du gaz d'échappement à travers un tampon de fluidisation (54) ; et
fluidisation et chauffage ultérieur du gypse par transfert de chaleur par conduction en faisant écouler sensiblement l'ensemble des gaz d'échappement à travers le gypse.

35. Procédé selon la revendication 34, comprenant en outre l'étape d'ouverture d'une soupape de trop-plein (82) pour permettre la sortie du gypse fluidisé à travers celle-ci lorsque le gypse atteint sensiblement 150 degrés Celsius (300 degrés Fahrenheit).

36. Procédé selon la revendication 34, comprenant en outre l'étape d'enlèvement et de recirculation de parties stagnantes du gypse près de la paroi inférieure par l'intermédiaire d'un mécanisme d'agitation (62).
